Europäisches Patentamt

European Patent Office

Office européen des brevets

(19)

(11) Publication number: **0 093 198**
**B1**

# (12) EUROPEAN PATENT SPECIFICATION

(45) Date of publication of patent specification: 07.05.86

(21) Application number: 82111340.4

(22) Date of filing: 07.12.82

(51) Int. Cl.⁴: **C 09 D 7/12,** C 09 D 3/72

(54) **Additive compound designed to reduce the harmful effects produced by polyurethane paints and varnishes and the finishes obtained therewith.**

(30) Priority: 22.04.82 IT 4003382

(43) Date of publication of application:
09.11.83 Bulletin 83/45

(45) Publication of the grant of the patent:
07.05.86 Bulletin 86/19

(84) Designated Contracting States:
AT DE FR GB IT NL SE

(56) References cited:
AT-B- 257 010
AT-B- 284 294

(73) Proprietor: OECE - INDUSTRIE CHIMICHE - S.p.A.
96, Via Volturno
I-41032 Cavezzo (Modena) (IT)

(72) Inventor: Giusti, Giorgio, Prof.
9, Via Salvioli
I-41100 Modena (IT)
Inventor: Raffellini, Peppino, Dr.
20, Via della Libertà
I-41032 Cavezzo (Modena) (IT)
Inventor: Benatti, Gastone, Dr.
132, Via Gavioli
I-41032 Cavezzo (Modena) (IT)
Inventor: Vernizzi, Giorgio
47, Via Carbonieri
I-41100 Modena (IT)

(74) Representative: Gardi, Giuliano
Gardipatent Palazzo Prora 605, Via Giardini
I-41100 Modena (IT)

Courier Press, Leamington Spa, England.

EP 0 093 198 B1

## 0 093 198

**Description**

The invention relates to a compound which reduces the harmful effects produced by polyurethane paints and varnishes and their application—that is, a chemical compound added to said varnishes—which may be applied to wood, metal, plastic etc.—to the end of drastically reducing the changes in the cellular metabolism of mucous membrane located in the conjunctiva and the respiratory organs; the scope of the patent likewise embracing such polyurethane paints and varnishes that contain the said compound. Austrian Patent 25.70.10 discloses the use of esters as hygroscopic substances by means of which to stabilise mixes for moisture-curing paints and varnishes of the type containing polyurethane in organic solvent; such esters are hydrolized by water with consequent formation of an alcohol. In moisture-curing paints/varnishes of this type, the introduction of such hygroscopic esters ensures catching of water, thereby avoiding any change in state of isocyanates which the paint/varnish carries in the form of prepolymers. Austrian Patent 28.42.94 discloses a formulation for stove enamel containing polyhydroxyle compounds and blocked polyisocyanates, the essential feature of which is that the polyhydroxyle compounds consist of polyhydroxyle alcohol hydroxyurethanes and a smaller amount of polyisocyanates having molecular weight of between 300 and 20.000. Paint/varnish/enamal formulae according to the two Austrian Patents aforementioned feature the use of substances containing hydroxyl groups and free hydrogen atoms by means of which polyisocyanates in the form of blocked prepolymers are obtained. Neither patent takes account of the monomers not utilised in such chemical reaction, which ultimately find their way into the prepolymer solutions. The risks to the user are well known, since isocyanic monomers untouched by the prepolymeric reaction remain free, and are given off into the environment when the paint/varnish is ultimately used. The prior art in this field makes no provision for substances designed to be added to polyurethane paints and varnishes containing free volatile isocyanate monomers, in order to reduce their volatility and harmful side-effect—however varied—caused by such products on the human organism due to the presence of free volatile monomers therein—viz: toluene-diisocyanate, or T.D.I., hexamethylene-diisocyanate, or H.D.I., diphenylmethane-diisocyanate, or M.D.I., and isophorone-diisocyanate, or I.P.D.I., and other such like isocyanate monomers.

The prior art thus stands in need of considerable improvement, especially with regard to bringing about a condition wherein the possibility of the human organism's being exposed to components given off by paints/varnishes containing free monomeric substances may be drastically reduced. One may discern from the foregoing preamble that a necessity exists for solving the technical problem posed by the search for one or more substances which, adopted in polyurethane paints/varnishes already made up of 35 to 60% film-forming substances and 25 to 60% solvent plus other auxiliary components, will bring about a reduced concentration of monomers in such paint/varnish—hence in the surroundings, when the latter is exposed.

The invention solves the problem thus stated in that it sets forth a compound for said polyurethane paints/varnishes whose composition is characterised by a mixture of substances containing active hydrogen atoms, and as such ideally suited to react with isocyanic groups contained in still free monomers,—the result being a decrease in the actual monomer's volatility. Indeed by reacting with isocyanic groups, in this way, the compound transforms the monomer into a completely different substance, and one with a higher molecular weight—this is most important of all.

The compound described herein also contains fixing agents, so-called, which attenuate the release of volatile substances from paints/varnishes which may be disagreeable or irritating to the olfactory senses and organs. Such fixing agents reduce vapour tension in the volatile substances, and prolong the agreeable olfactive effects of the compound.

Advantages both envisaged and furnished by the invention are: significantly reduced concentration of the free isocyanic monomer; the consequent diminished evaporation of the monomer from the paint/varnish; and a markedly less intense smell given off during preparation, use, and drying out. Furthermore, the use of the compound which may be mixed with polyurethane paints/varnishes described herein implies, in practical terms, not only those advantages provided by the reduction of biochemically harmful effects, but also those obtained by avoiding the olfactory annoyance associated with the so-called "smell of paint" which is often responsible for suggestive and yet always unpleasant physical conditions and which, sometimes, originate subjective troubles to the respiratory system.

The compound to which the invention relates is composed of alcohol terpenic- and/or phenolterpenic—substances such as terpineol, linalol, eugenol, iso-eugenol, benzylisoeugenol, geraniol, rhodinol, borneol, tetrahydrolinalol, citronellol, nerol, carvol, and farnesol, safrole, thymol, anethole, plus fixing agents such as vanillin, cumarin and heliotropin, which are pleasing to the olfactory senses. The actual number of individual components included in the compound, and their proportionate relationship, may vary commensurately with the differing varieties of polyurethane paint/varnish with which said compound is mixed. The amount by weight of the compound introduced may be varied from 0.1. to 10 times the quantity by weight of free volatile monomer present in the paint/varnish. The manufacturing process to obtain the compound described herein, involves settling down all liquid and solid components for a period of some 4 or 5 weeks at ambient temperature. Solids may be dissolved at 25—40°C before being added to the liquids, the ultimate blend then being left still for up to 10 weeks at between 10 and 30°C—the time lapse reducing with an increase in said temperature value.

During production, the compound may be mixed with the polyurethane paint/varnish either by

2

addition to part A, which is a solution of alkyd short-long oil resins, or polyol or to part B, which is a polyisocyanate solution—this at all events being done prior to mixture of the two parts in readiness for application, according to the manufacturer's directions for the use of polyurethane paints and varnishes of the kind. Though the compound described herein brings about a marked reduction in the harmful effects of polyurethane paint/varnish as applied also to metal, plastics or the like, the one particular compound set forth by way of non-restrictive example is one made up specifically for wood only.

Mat polyurethane wood varnish

Part A

| | |
|---|---|
| Alkyd resin | 50 parts by weight |
| Surface additive | 1 part by weight |
| Flatting agent | 2 parts by weight |
| Solvent mix No. 1 | 37 parts by weight |
| Solvent mix No. 2 | 10 parts by weight |

Part B

| | |
|---|---|
| Polyfunctional aromatic isocyanates | 45 parts by weight |
| Solvent mix No. 1 | 55 parts by weight |

Solvent mix No. 1 in either of the two parts A and B consists of 60% ethyl acetate and 40% butyl acetate, whilst solvent mix 2 contains toluene and xylene in equal proportion.

The mix-proportion between part A and part B is 100 and 50, respectively, with the following compound—to which the invention relates—being added to part A only at a rate of 0.6% by weight:

Compound

| | |
|---|---|
| Alfa-terpineol | 13—18 parts by weight |
| Linalol | 10—12 parts by weight |
| Eugenol | 30—35 parts by weight |
| Isoeugenol | 22—25 parts by weight |
| Benzylisoeugenol | 2 parts by weight |
| Geraniol | 2— 5 parts by weight |
| Rhodinol | 8 parts by weight |
| Borneol | 3 parts by weight |
| Vanillin | 2— 4 parts by weight |
| Heliotropin | 2— 3 parts by weight |
| Cumarin | 1— 3 parts by weight |

When subjected to flow-test through a Ford 4, the mix presents no significant variation in viscosity—increase over a given time-lapse, a lead of some 2.6 seconds being observed after 180 minutes, with respect to the same product without the compound. During subsequent application—with the compound—it comes about unfailingly that the toluene-diisocyanate, or T.D.I.'s continuity of state as a free volatile monomer decreases from an initial 0.25% by weight down to 0.10%—this at 1 hour and 30 minutes from the time of mixing together parts A and B. In order to clarify the description still further, the following tables carry results obtained from examples numbered 1 to 8, these relating to a variety of polyurethane paints/varnishes—viz, mat, gloss, primer, and sealer. In the column with number carrying the exponent +, those figures published relate to the same product alongside plus compound, from which it will be seen that the level of T.D.I. is considerably reduced.

Other examples of composition of the compound according to the invention are shown here below:

3

Example a:

| | |
|---|---|
| Alfa-terpineol | 20—25 parts by weight |
| Linalol | 10—15 parts by weight |
| Eugenol | 25—28 parts by weight |
| Isoeugenol | 10—18 parts by weight |
| Benzylisoeugenol | 3— 4 parts by weight |
| Geraniol | 7— 8 parts by weight |
| Rhodinol | 5— 6 parts by weight |
| Borneol | 6 parts by weight |
| Vanillin | 2 parts by weight |
| Heliotropin | 2 parts by weight |
| Cumarin | 1 part  by weight |

Example b:

| | |
|---|---|
| Alfa-terpineol | 5—12 parts by weight |
| Linalol | 15—25 parts by weight |
| Eugenol | 20—40 parts by weight |
| Isoeugenol | 5—15 parts by weight |
| Benzylisoeugenol | 18— 5 parts by weight |
| Geraniol | 8—15 parts by weight |
| Rhodinol | 15— 8 parts by weight |
| Borneol | 12— 5 parts by weight |
| Vanillin, Heliotropin and Cumarin in equal amounts | 2— 5 parts by weight |

Example c:

| | |
|---|---|
| Alfa-terpineol | 26—30 parts by weight |
| Eugenol | 20—24 parts by weight |
| Isoeugenol | 26—10 parts by weight |
| Benzylisoeugenol | 3— 8 parts by weight |
| Geraniol | 10— 2 parts by weight |
| Rhodinol | 12— 2 parts by weight |
| Borneol | 6— 1 parts by weight |
| Vanillin, Heliotropin and Cumarin in equal amounts | 5— 2 parts by weight |

Example d:

| Farnesol | 13—18 parts by weight |
| --- | --- |
| Tetrahydrolinalol | 10—12 parts by weight |
| Safrole | 30—35 parts by weight |
| Citronellol | 22—25 parts by weight |
| Thymol | 2 parts by weight |
| Nerol | 2— 5 parts by weight |
| Anethole | 8 parts by weight |
| Carvol | 3 parts by weight |
| Vanillin | 2— 4 parts by weight |
| Heliotropin | 2— 3 parts by weight |
| Cumarin | 1— 3 parts by weight |

Example e:

| Farnesol | 20—25 parts by weight |
| --- | --- |
| Tetrahydrolinalol | 10—15 parts by weight |
| Safrole | 25—28 parts by weight |
| Citronellol | 10—18 parts by weight |
| Thymol | 3— 4 parts by weight |
| Nerol | 7— 8 parts by weight |
| Anethole | 5— 6 parts by weight |
| Carvol | 6 parts by weight |
| Heliotropin | 2 parts by weight |
| Cumarin | 1 part  by weight |

Example f:

| Farnesol | 5—12 parts by weight |
| --- | --- |
| Tetrahydrolinalol | 15—25 parts by weight |
| Safrole | 20—10 parts by weight |
| Citronellol | 5—15 parts by weight |
| Thymol | 18— 5 parts by weight |
| Nerol | 8—15 parts by weight |
| Anethole | 15— 8 parts by weight |
| Carvol | 12— 5 parts by weight |
| Vanillin, Heliotropin and Cumarin in equal amounts | 2— 5 parts by weight |

Example g:

| | |
|---|---|
| Farnesol | 26—30 parts by weight |
| Tetrahydrolinalol | 5—10 parts by weight |
| Safrole | 20—24 parts by weight |
| Citronellol | 26—10 parts by weight |
| Thymol | 3— 8 parts by weight |
| Nerol | 2—10 parts by weight |
| Anethole | 12— 2 parts by weight |
| Carvol | 6— 1 parts by weight |
| Vanillin, Heliotropin and Cumarin in equal amounts | 2— 5 parts by weight |

| Type | Mat 1 | | Mat 2 | |
|---|---|---|---|---|
| Example No. | 1 | 1+ | 2 | 2+ |
| Part A—C.O. Alkyd Resin (60% Xylene) | 50 | 50 | 60 | 60 |
| Satured Polyester Resin 100% | — | — | — | — |
| Toluene | 10 | 10 | 11 | 11 |
| Ethyl Acetate | 22 | 22 | 13 | 13 |
| Butyl Acetate | 16 | 16 | 11 | 11 |
| Ethylglycol Acetate | — | — | 3 | 3 |
| Amorphous Silica | 2 | 2 | 2 | 2 |
| Zinc Stearate | — | — | — | — |
| Reactive Compound | — | 0.5 | — | 0.5 |
| Part B—Polyisocyanate (75% in Ethyl Acetate) | 15 | 15 | 15 | 15 |
| Polyisocyanurate (50% in Isobutyl Acetate) | 10 | 10 | 15 | 15 |
| Butyl Acetate | 20 | 20 | 15 | 15 |
| Ethylglycol Acetate | 5 | 5 | 5 | 5 |
| Characteristics Dry Residue | 32 | 32 | 37.8 | 37.8 |
| Free Monomer (on n.v. contents) | 0.25 | 0.25 | 0.26 | 0.26 |
| T.D.I. Free Monomer in A+B 1½ hours after mix | 0.20 | 0.10 | 0.20 | 0.12 |
| Viscosity (Ford-4) (seconds) | 15/20 | 15/20 | 16/22 | 16/22 |
| Pot-Life (hours) | 2—3 | 2—3 | 2—3 | 2—3 |

6

| Type | Mat 3 | | Mat 4 | |
|---|---|---|---|---|
| Example No. | 3 | 3+ | 4 | 4+ |
| Part A—C.O. Alkyd Resin (60% Xylene) | 65 | 65 | 75 | 75 |
| Saturated Polyester Resin 100% | — | — | — | — |
| Toluene | 11.5 | 11.5 | 7 | 7 |
| Ethyl Acetate | 10 | 10 | 5 | 5 |
| Butyl Acetate | 8 | 8 | 10 | 10 |
| Ethylglycol Acetate | 3 | 3 | — | — |
| Amorphous Silica | 2.5 | 2.5 | — | — |
| Zinc Stearate | — | — | 3 | 3 |
| Reactive Compound | — | 0.5 | — | 0.6 |
| Part B—Polyisocyanate (75% in Ethyl Acetate) | 10 | 10 | 20 | 20 |
| Polyisocyanurate (50% in Isobutyl Acetate) | 20 | 20 | 10 | 10 |
| Butyl Acetate | 15 | 15 | 15 | 15 |
| Ethylglycol Acetate | 5 | 5 | 5 | 5 |
| Characteristics Dry Residue | 39.3 | 39.3 | 45 | 45 |
| Free monomer (on n.v. contents) | 0.24 | 0.24 | 0.28 | 0.28 |
| T.D.I. Free Monomer in A+B 1½ hours after mix | 0.20 | 0.09 | 0.22 | 0.12 |
| Viscosity (Ford-4) (seconds) | 16/22 | 16/22 | 16/22 | 16/22 |
| Pot-Life (hours) | 2—3 | 2—3 | 2—3 | 2—3 |

| Type | Primer 5 | | Gloss 6 | |
|---|---|---|---|---|
| Example No. | 5 | 5+ | 6 | 6+ |
| Part A—C.O. Alkyd Resin (60% Xylene) | 60 | 60 | 80 | 80 |
| Saturated Polyester Resin 100% | — | — | — | — |
| Toluene | 15 | 15 | — | — |
| Ethyl Acetate | 10 | 10 | — | — |
| Butyl Acetate | 13 | 13 | 15 | 15 |
| Ethylglycol Acetate | — | — | 5 | 5 |
| Amorphous Silica | — | — | — | — |
| Zinc Stearate | 2 | 2 | — | — |
| Reactive Compound | — | 0.3 | — | 0.7 |
| Part B—Polyisocyanate (75% in Ethyl Acetate) | — | — | 35 | 35 |
| Polyisocyanurate (50% in Isobutyl Acetate) | 25 | 25 | — | — |
| Butyl acetate | 20 | 20 | 10 | 10 |
| Ethylglycol Acetate | 5 | 5 | 5 | 5 |
| Characteristics Dry residue | 33.7 | 33.7 | 49.5 | 49.5 |
| Free Monomer (on n.v. contents) | 0.16 | 0.16 | 0.36 | 0.36 |
| T.D.I. Free monomer in A+B 1½ hours after mix | 0.12 | 0.8 | 0.32 | 0.16 |
| Viscosity (Ford-4) (seconds) | 16/22 | 16/22 | 18/20 | 18/20 |
| Pot-Life (hours) | 2—3 | 2—3 | 4—5 | 4—5 |

8

| Type | Sealer 7 | | Sealer 8 | |
|---|---|---|---|---|
| Example No. | 7 | 7+ | 8 | 8+ |
| Part A—C.O. Alkyld Resin (60% Xylene) | — | — | 30 | 30 |
| Saturated Polyester Resin 100% | 25 | 25 | 10 | 10 |
| Toluene | 25 | 25 | 25 | 25 |
| Ethyl Acetate | 30 | 30 | 25 | 25 |
| Butyl Acetate | 15 | 15 | 10 | 10 |
| Ethylglycol Acetate | 5 | 5 | — | — |
| Amorphous Silica | — | — | — | — |
| Zinc Stearate | — | — | — | — |
| Reactive Compound | — | 0.7 | — | 0.6 |
| Part B—Polyisocyanate (75% in Ethyl Acetate) | 35 | 35 | 25 | 25 |
| Polyisocyanurate (50% in Isobutyl Acetate) | — | — | 10 | 10 |
| Butyl Acetate | 10 | 10 | 10 | 10 |
| Ethylglycol Acetate | 5 | 5 | 5 | 5 |
| Characteristics Dry Residue | 34.0 | 34.0 | 27.8 | 27.8 |
| Free Monomer (on n.v. contents) | 0.36 | 0.36 | 0.32 | 0.32 |
| T.D.I. Free Monomer in A+B 1½ hours after mix | 0.30 | 0.16 | 0.27 | 0.12 |
| Viscosity (Ford-4) (seconds) | 14/16 | 14/16 | 14/16 | 14/16 |
| Pot-Life (hours) | 4—5 | 4—5 | 4—5 | 4—5 |

When carried into effect, the compound thus described may be mixed with part B of the product during manufacture—in proportion such as will not destabilise the overall composition, of course. With the latter consideration in mind, the compound may also be introduced immediately prior to final application of the product, in other words, having already mixed together parts A and B. All components making up the compound, as described, may be mixed with one another in all possible combinations following the suggested proportions: likewise one might add auxiliary or inert substances, thinners, or secondary components etc., in order to control the given redolence.

**Claims**

1. Compound for reducing the harmful effects produced by polyurethane paints and varnishes containing free volatile isocyanate monomers and the paints and varnishes obtained therewith, characterised in that it consists of alcoholterpenic—and/or phenolterpenic—substances as: terpineol, linalol, eugenol, isoeugenol, benzylisoeugenol, geraniol, rhodinol, borneol, tetrahydrolinalol, citronellol, nerol, carvol, farnesol, safrole, thymol and anethole, united with fixing agents such as vanillin, cumarin and heliotropin; said compound being mixed at a rate of 0.1 to 10 times the quantity by weight of free monomer contained in the paint or varnish.

2. Compound as in claim 1, characterised in that it is obtained from a mix proportioned as follows: 13—18 parts alpha-terpineol, 10—12 parts linalol, 30—35 parts eugenol, 22—25 parts isoeugenol, 2 parts benzylisoeugenol, 2—5 parts geraniol, 8 parts rhodinol, 3 parts borneol, 2—4 parts vanillin, 2—3 parts heliotropin and 1—3 parts cumarin.

3. Compound as in claim 1, characterised in that it is obtained from a mix proportioned as follows: 20—25 parts alpha-terpineol, 10—15 parts linalol, 25—28 parts eugenol, 10—18 parts isoeugenol, 3—4 parts benzylisoeugenol, 7—8 parts geraniol, 5—6 parts rhodinol, 6 parts borneol, 2 parts vanillin, 2 parts heliotropin and 1 part cumarin.

4. Compound as in claim 1, characterised in that it is obtained from a mix proportioned as follows: 5—12 parts alpha-terpineol, 15—25 parts linalol, 20—40 parts eugenol, 5—15 parts isoeugenol, 18—5 parts benzylisoeugenol, 8—15 parts geraniol, 15—8 parts rhodinol, 12—5 parts borneol, and 2—5 parts cumarin, vanillin and heliotropin in equal amounts.

5. Compound as in claim 1, characterised in that it is obtained from a mix proportioned as follows: 26—30 parts alpha-terpineol, 20—24 parts eugenol, 26—10 parts isoeugenol, 3—8 parts benzylisoeugenol, 10—2 parts geraniol, 12—2 parts rhodinol, 6—1 parts borneol, and 5—2 parts cumarin, vanillin and heliotropin in equal amounts.

6. Compound as in claim 1, characterised in that it is obtained from a mix proportioned as follows: 13—18 parts farnesol, 10—12 parts tetrahydrolinalol, 30—35 parts safrole; 22—25 parts citronellol, 2 parts thymol, 2—5 parts nerol, 8 parts anethole, 3 parts carvol, with 2—4 parts vanillin, 2—3 parts heliotropin, and 1—3 parts cumarin.

7. Compound as in claim 1, characterised in that it is obtained from a mix proportioned as follows: 20—25 parts farnesol, 10—15 parts tetrahydrolinalol, 25—28 parts safrole, 10—18 parts citronellol, 3—4 parts thymol, 7—8 parts nerol, 5—6 parts anethole, 6 parts carvol, with 2 parts heliotropin and 1 part cumarin.

8. Compound as in claim 1, characterised in that it is obtained from a mix proportioned as follows: 5—12 parts farnesol, 15—25 parts tetrahydrolinalol, 20—10 parts safrole, 5—15 parts citronellol, 18—5 parts thymol, 8—15 parts nerol, 15—8 parts anethole, 12—5 parts carvol, and 2—5 parts vanillin, cumarin and heliotropin in equal amounts.

9. Compound as in claim 1, characterised in that it is obtained from a mix proportioned as follows: 26—30 parts farnesol, 5—10 parts tetrahydrolinalol, 20—24 parts safrole, 26—10 parts citronellol, 3—8 parts thymol, 2—10 parts nerol, 12—2 parts anethole, 6—1 parts carvol, with 2—5 parts vanillin, cumarin and heliotropin in equal amounts.

## Patentansprüche

1. Stoff zur Verminderung schädlicher Effekte von Polyurethanfarben und—lacken mit ungebundenen, fluchtigen Isozyanatmonomeren und den damit erhaltenen Farben und Lacken, dadurch gekennzeichnet, dass er aus Terpen- und/oder Phenolterpenalkohol und Stoffen, wie Terpineol, Linalol, Eugenol, Isoeugenol, Benzylisoeugenol, Geraniol, Rhodinol, Borneol, Tetrahydrolinalol, Citronellol, Nerol, Carvol, Farnesol, Safrol, Thymol und Anethol plus Fixiermitteln, wie Wanillin, Cumarin und Heliotropin besteht, dieser Stoff wird von 0,1 bis zum 10-fachen des Gewichtsanteils ungebundener Monomere in den Farben oder Lacken beigemengt.

2. Stoff nach Patentanspruch 1, dadurch gekennzeichnet, dass er aus einer Mischung im folgenden Verhältnis erhalten wird: 13—18 Anteile Alpha-Terpineol, 10—12 Anteile Linalol, 30—35 Anteile Eugenol, 22—25 Anteile Isoeugenol, 2 Anteile Benzylisoeugenol, 2—5 Anteile Geraniol, 8 Anteile Rhodinol, 3 Anteile Borneol, 2—4 Anteile Vanillin, 2—3 Anteile Heliotropin und 1—3 Anteile Cumarin.

3. Stoff nach Patentanspruch 1, dadurch gekennzeichnet, dass er aus einer Mischung im folgenden Verhaltnis erhalten wird: 20—25 Anteile Alpha-Terpineol, 10—15 Anteile Linalol, 25—28 Anteile Eugenol, 10—18 Anteile Isoeugenol, 3—4 Anteile Benzylisoeugenol, 7—8 Anteile Geraniol, 5—6 Anteile Rhodinol, 6 Anteile Borneol, 2 Anteile Vanillin, 2 Anteile Heliotropin und 1 Anteil Cumarin.

4. Stoff nach Patentanspruch 1, dadurch gekennzeichnet, dass er aus einer Mischung im folgenden Verhältnis erhalten wird: 5—12 Anteile Alpha-Terpineol, 15—25 Anteile Linalol, 20—40 Anteile Eugenol, 5—15 Anteile Isoeugenol, 13—5 Anteile Benzylisoeugenol, 3—15 Anteile Geraniol, 15—8 Anteile Rhodinol, 12—5 Anteile Borneol und 2—5 Anteile Cumarin, Vanillin und Heliotropin in gleichen Anteilen.

5. Stoff nach Patentanspruch 1, dadurch gekennzeichnet, dass er aus einer Mischung im folgenden Verhältnis erhalten wird: 26—30 Anteile Alpha-Terpineol, 20—24 Anteile Eugenol, 26—10 Anteile Isoeugenol, 3—8 Anteile Benzylisoeugenol, 10—2 Anteile Geraniol, 12—2 Anteile Rhodinol, 6—1 Anteile Borneol und 5—2 Anteile Cumarin, Vanillin und Heliotropin, in gleichen Anteilen.

6. Stoff nach Patentanspruch 1, dadurch gekennzeichnet, dass er aus einer Mischung im folgenden Verhältnis erhalten wird: 13—18 Anteile Farnesol, 10—12 Anteile Tetrahydrolinalol, 30—35 Anteile Safrol, 22—25 Anteile Citronellol, 2 Anteile Thymol, 2—5 Anteile Nerol, 8 Anteile Anethol, 3 Anteile Carvol mit 2—4 Anteilen Vanillin, 2—3 Anteilen Heliotropin und 1—3 Anteilen Cumarin.

7. Stoff nach Patentanspruch 1, dadurch gekennzeichnet, dass er aus einer Mischung im folgenden Verhältnis erhalten wird: 20—25 Anteile Farnesol, 10—15 Anteile Tetrahydrolinalol, 25—28 Anteile Safrol, 10—18 Anteile Citronellol, 3—4 Anteile Thymol, 7—8 Anteile Nerol, 5—6 Anteile Anethol, 6 Anteile Carvol mit 2 Anteilen Heliotropin und 1 Anteil Cumarin.

8. Stoff nach Patentanspruch 1, dadurch gekennzeichnet, dass er aus einer Mischung im folgenden Verhältnis erhalten wird: 5—12 Anteile Farnesol, 15—25 Anteile Tetrahydrolinalol, 20—10 Anteile Safrol, 5—15 Anteile Citronellol, 18—5 Anteile Thymol, 8—15 Anteile Nerol, 15—8 Anteile Anethol, 12—5 Anteile Carvol und 2—5 Anteile Vanillin, Cumarin und Heliotropin in gleichen Anteilen.

9. Stoff nach Patentanspruch 1, dadurch gekennzeichnet, dass er aus einer Mischung im folgenden Verhältnis erhalten wird: 26—30 Anteile Farnesol, 5—10 Anteile Tetrahydrolinalol, 20—24 Anteile Safrol, 26—10 Anteile Citronellol, 3—8 Anteile Thymol, 2—10 Anteile Nerol, 12—2 Anteile Anethol, 6—1 Anteile Carvol mit 2—5 Anteilen Vanillin, Cumarin und Heliotropin in gleichen Anteilen.

**Revendications**

1. Composé pour la réduction des malfaisants effets produits par les peintures et laques polyurethanniques contenant des monomères libres volatifs d'isocyanate et les peintures et laques obtenues avec celui-ci, caractérisé par le fait qu'il consiste en substances alcoolterpéniques et/ou phénolterpéniques telles que le terpinéol, le linalol, l'eugénol, l'isoeugénol, le benzylisoeugénol, le géraniol, le rhodinol, le bornéol, le tétrahydrolinalol, le citronellol, le nérol, le carvol, le farnésol, le safrole, le thymol, et l'anéthole, associées à des agents fixateurs tels que la vanilline, la coumarine et l'heliotropine; le composé en question étant mélangé dans une proportion de 0,1 à 10 fois la quantité en poids du monomère libre contenu dans la peinture ou la laque.

2. Composé conforme à la revendication 1, caractérisé par le fait qu'il est obtenu à partir d'un mélange dont les proportions sont les suivantes: 13—18 parties d'alpha-terpinéol, 10—12 parties de linalol, 30—35 parties d'eugénol, 22—25 parties d'isoeugénol, 2 parties de benzylisoeugénol, 2—5 parties de géraniol, 8 parties de rhodinol, 3 parties de bornéol, 2—4 parties de vanilline, 2—3 parties d'héliotropine et 1—3 parties de coumarine.

3. Composé conforme à la revendication 1, caractérisé par le fait qu'il est obtenu à partir d'un mélange dont les proportions sont les suivantes: 20—25 parties d'alpha-terpinéol, 10—15 parties de linalol, 25—28 parties d'eugénol, 10—18 parties d'isoeugénol, 3—4 parties de benzylisoeugénol, 7—8 parties de géraniol, 5—6 parties de rhodinol, 6 parties de bornéol, 2 parties de vanilline, 2 parties d'héliotropine et 1 partie de coumarine.

4. Composé conforme à la revendication 1, caractérisé par le fait qu'il est obtenu à partir d'un mélange dont les proportions sont le suivantes: 5—12 parties d'alpha-terpinéol, 15—25 parties de linalol, 20—40 parties d'eugénol, 5—15 parties d'isoeugénol, 18—5 parties de benzylisoeugénol, 8—15 parties de géraniol, 15—8 parties de rhodinol, 12—5 parties de bornéol et 2—5 parties de coumarine, vanilline et héliotropine en quantités égales.

5. Composé conforme à la revendication 1, caractérisé par le fait qu'il est obtenu à partir d'un mélange dont les proportions sont le suivantes: 26—30 parties d'alpha-terpinéol, 20—24 parties d'eugénol, 26—10 parties d'isoeugénol, 3—8 parties de benzylisoeugénol, 10—2 parties de géraniol, 12—2 parties de rhodinol, 6—1 parties de bornéol, et 5—2 parties de coumarine, vanilline et héliotropine en proportions égales.

6. Composé conforme à la revendication 1, caractérisé par le fait qu'il est obtenu à partir d'un mélange dont les proportions sont les suivantes: 13—18 parties de farnésol, 10—12 parties de tétrahydrolinalol, 30—35 parties de safrole, 22—15 parties de citronellol, 2 parties de thymol, 2—5 parties de nerol, 8 parties d'anéthole, 3 parties de carvol, avec 2—4 parties de vanilline, 2—3 parties d'héliotropine et 1—3 parties de coumarine.

7. Composé conforme à la revendication 1, caractérisé par le fait qu'il est obtenu à partir d'un mélange dont les proportions sont les suivantes: 20—25 parties de farnesol, 10—15 parties de tétrahydrolinalol, 25—28 parties de safrole, 10—18 parties de citronellol, 3—4 parties de thymol, 7—8 parties de nérol, 5—6 parties d'anéthole, 6 parties de carvol, avec 2 parties d'hèliotropine et 1 partie de coumarine.

8. Composé conforme à la revendication 1, caractérisé par le fait qu'il est obtenu à partir d'un mélange dont les proportions sont les suivantes: 5—12 parties de farnésol, 15—25 parties de tétrahydrolinalol, 20—10 parties de safrole, 5—15 parties de citronellol, 18—5 parties de thymol, 8—15 parties de nérol, 15—8 parties d'anéthole, 12—5 parties de carvol et 2—5 parties de vanilline, de coumarine et d'héliotropine en quantités égales.

9. Composé conforme à la revendication 1, caractérisé par le fait qu'il est obtenu à partir d'un mélange dont les proportions sont le suivantes: 26—30 parties de farnésol, 5—10 parties de tétrahydrolinalol, 20—24 parties de safrole, 26—10 parties de citronellol, 3—8 parties de thymol, 2—10 parties de nérol, 12—2 parties d'anéthole, 6—1 parties de carvol, avec 2—5 parties de vanilline, de coumarine et d'héliotropine en quantités égales.